(19) Europäisches Patentamt / European Patent Office / Office européen des brevets

(11) **EP 1 895 676 A1**

(12) **EUROPEAN PATENT APPLICATION**

(43) Date of publication:
05.03.2008 Bulletin 2008/10

(51) Int Cl.:
*H04B 7/005* (2006.01)    *H04Q 7/36* (2006.01)

(21) Application number: 07014507.3

(22) Date of filing: 24.07.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: 01.09.2006 KR 20060084173

(71) Applicant: **LG - Nortel Co., Ltd.**
**679, Yeoksam-dong**
**Gangnam-gu**
**Seoul (KR)**

(72) Inventor: **Kim, Dong Hun**
**Bundang-gu,**
**Seongnam-si**
**Gyeonggi-do 463-020 (KR)**

(74) Representative: **Katérle, Axel**
**Wuesthoff & Wuesthoff**
**Patent- und Rechtsanwälte**
**Schweigerstraße 2**
**81541 München (DE)**

(54) **Method for extending wireless link coverage by controlling wireless communication resource allocation**

(57)    A method is provided for extending wireless link coverage in a wireless communication system. The method may include limiting a number of allocable sub-channels to a predetermined value in allocating wireless channels that include sub-channels and symbols, calculating a maximum transmission power per sub-channel based on the limited number of allocable sub-channels, and performing power control based on the calculated maximum transmission power per sub-channel. The calculation of the maximum transmission power per sub-channel may be executed at the base station or the mobile terminal by dividing the transmittable maximum power by the limited number of allocable sub-channels.

EP 1 895 676 A1

**Description**

The present application claims priority from Korean Patent Application No. 10-2006-84173, filed September 1, 2006, the entire subject matter of which is incorporated herein by reference.

## BACKGROUND

### 1. Field

Embodiments of the present invention may relate to a method for extending wireless link coverage. More particularly, embodiments of the present invention may relate to a method for extending wireless link coverage by controlling wireless communication resource allocation.

### 2. Background

Wireless link coverage is an important factor that affects efficiency of a mobile communication system. The wireless link coverage in the mobile communication system may be represented by a maximum distance between a mobile terminal and a base station that can support communication therebetween. If the wireless link coverage is too small, then mobility of a mobile terminal may be restricted. On the contrary, if the wireless link coverage is too large, then interference may be induced between neighboring cells.

The wireless link coverage may be classified into downlink coverage, uplink coverage and system coverage according to a direction of signal transmission. The downlink coverage may be represented by a maximum distance between a base station and a mobile terminal, beyond which the mobile terminal can not sense signals from the base station. The uplink coverage may be represented by a maximum distance between a base station and a mobile terminal, beyond which the base station can not sense signals from the mobile terminal. System coverage may be represented by a maximum distance between a base station and a mobile terminal, beyond which the base station and the mobile terminal can not communicate with each other. The system coverage may be determined to be the smaller of the downlink coverage or the uplink coverage.

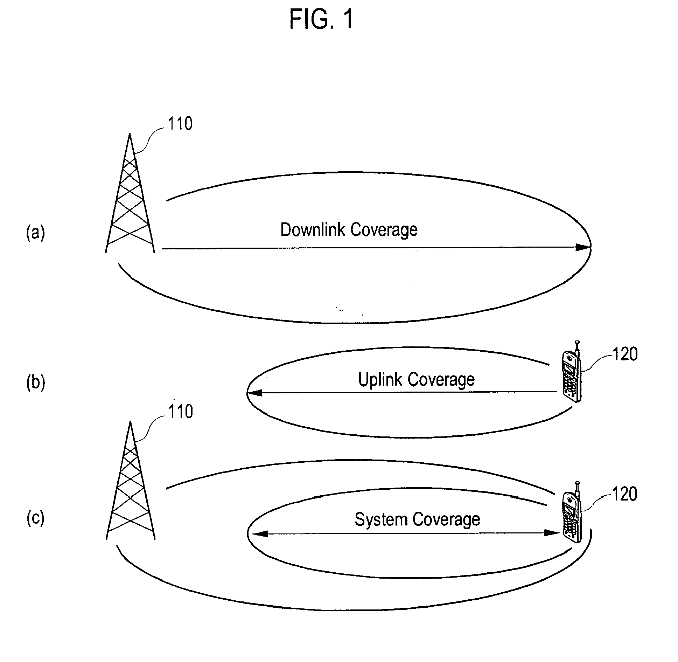

FIG. 1 is a diagram illustrating downlink coverage, uplink coverage and system coverage. As shown in FIG. 1 (a), the downlink coverage corresponds to a range that can be reached by a signal from a base station 110. As shown in FIG. 1(b), the uplink coverage corresponds to a range that can be reached by a signal from a mobile terminal 120. The factors for determining the coverage may include transmission power, Tx antenna gain, system bandwidth, Rx antenna gain, receiver sensitivity, fade margin, cable loss, etc. The system coverage may be limited by the uplink that may have a lower transmission power than or inferior components to the downlink. FIG. 1(c) shows an example of determining the system coverage as the uplink coverage that is smaller than the downlink coverage. As shown therein, when the system coverage is limited by the uplink coverage, the system coverage may be improved by extending the uplink coverage.

In a mobile communication system, a plurality of users may share media such as wireless channels that may be represented in a two-dimensional space consisting of time and frequency axes. The system may adjust efficiency of wireless communication by controlling sharing of such media. According to the specific manner of sharing the wireless channels, the mobile communication system may be classified into Code Division Multiple Access (CDMA), Time Division Multiple Access (TDMA), Frequency Division Multiple Access (FDMA), etc. A common characteristic of these access schemes is that they divide the wireless channels into combinations of time and frequency in order to control sharing of the wireless channels. In each of these access schemes, a specialized method may be available to extend the wireless link coverage.

Controllable factors for improving the uplink coverage may include transmission power, allocated bandwidth for data transmission, allocated time slots for data transmission, etc. Since other factors are fixed by hardware naturally and locally, it may be difficult and costly to make improvements with those factors. The transmission power, the allocated bandwidth and the time slots for data transmission, etc. have been considered to improve efficiency of the mobile communication system rather than to extend the wireless link coverage. Accordingly, there is a need to provide an efficient method for extending wireless link coverage without reducing efficiency of the mobile communication system.

## BRIEF DESCRIPTION OF THE DRAWINGS

Arrangements and embodiments may be described in detail with reference to the following drawings in which like reference numerals refer to like elements and wherein:

FIG. 1 is a diagram illustrating downlink coverage, uplink coverage and system coverage according to an example arrangement;

FIG. 2 illustrates a scheme for dividing wireless channels in an OFDMA mobile communication system;

FIG. 3 illustrates a method of allocating wireless resource according to an example arrangement and an example embodiment of the present invention;

FIG. 4 illustrates extending system coverage when a method of allocating wireless resource according to an example embodiment of the present invention is applied to the system;

FIG. 5 is a flow chart illustrating a wireless communication process that involves calculating a maximum transmission power per sub-channel at a mobile terminal according to an example embodiment of the present invention; and

FIG. 6 is a flow chart illustrating a wireless communication process that involves calculating a maximum transmission power per sub-channel at a base station according to an example embodiment of the present invention.

## DETAILED DESCRIPTION

A detailed description may be provided with reference to the accompanying drawings. One of ordinary skill in the art may realize that the following description is illustrative only and is not in any way limiting. Other configurations and embodiments of the present invention may readily suggest themselves to such skilled persons having the benefit of this disclosure.

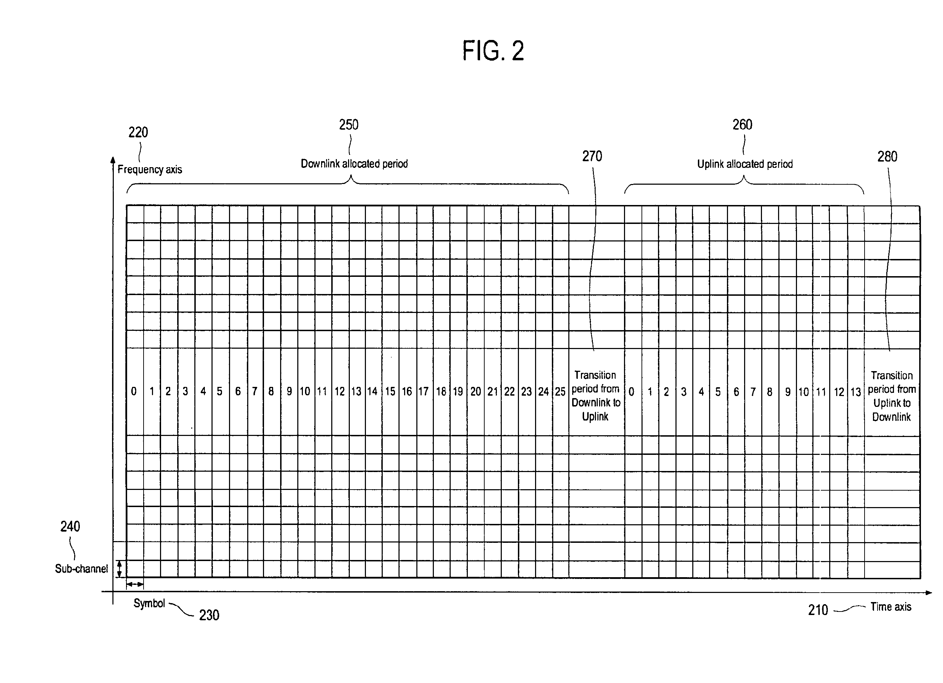

FIG. 2 illustrates a scheme for dividing wireless channels in an Orthogonal Frequency Division Multiple Access (OFDMA) mobile communication system. Embodiments of the present invention may be implemented in such a mobile communication system. As shown in FIG. 2, wireless channels may be represented in a two-dimensional space that includes a time axis 210 and a frequency axis 220. A plurality of users may share limited resources such as wireless channels to perform wireless communication with a base station. To share the wireless channels, a resource allocation scheduler may allocate the wireless channels to each user while considering an amount of data to be transferred and channel environments. In allocating wireless resources (wireless channels), a symbol 230 may refer to a minimum unit in the time axis 210 and a sub-channel 240 may refer to a minimum unit in the frequency axis 220. The resource allocation scheduler may allocate a number of symbols and a number of sub-channels two-dimensionally in order to make a user perform wireless communication.

In the OFDMA mobile communication system, as shown in FIG. 2, a time period allocated for downlink transmission (i.e., a downlink allocated period 250) and a time period allocated for uplink transmission (i.e., an uplink allocated period 260) may alternate in a non-overlapping fashion. During the downlink allocated period 250, the base station 110 may transmit signals (or data) to the mobile terminal 120. In such a case, the base station 110 may transmit signals (or data) concurrently to a plurality of mobile terminals 120 by dividing the frequency channels. During the uplink allocated period 260, the mobile terminal 120 may transmit signals (or data) to the base station 110. In such a case, a plurality of mobile terminals 120 may transmit signals (or data) concurrently by using different frequency channels. Between the downlink allocated periods 250 and the uplink allocated periods 260, extra periods 270, 280 may exist for transition between downlink and uplink.

Embodiments of the present invention may be used in any mobile communication system that uses wireless channels to divide channels along a time axis and a frequency axis. Although FIG. 2 illustrates the OFDMA mobile communication system in which the downlink allocated periods 250 and the uplink allocated periods 260 alternate, the mobile communication system may not use separate time periods for downlink transmission and uplink transmission. For example, some mobile communication systems may provide orthogonality between wireless channels by dividing the channels along the frequency axis while using the same time periods. Embodiments of the present invention may be implemented in a mobile communication system that divides the wireless resources into a plurality of sub-channels and symbols along the frequency and time axes, respectively.

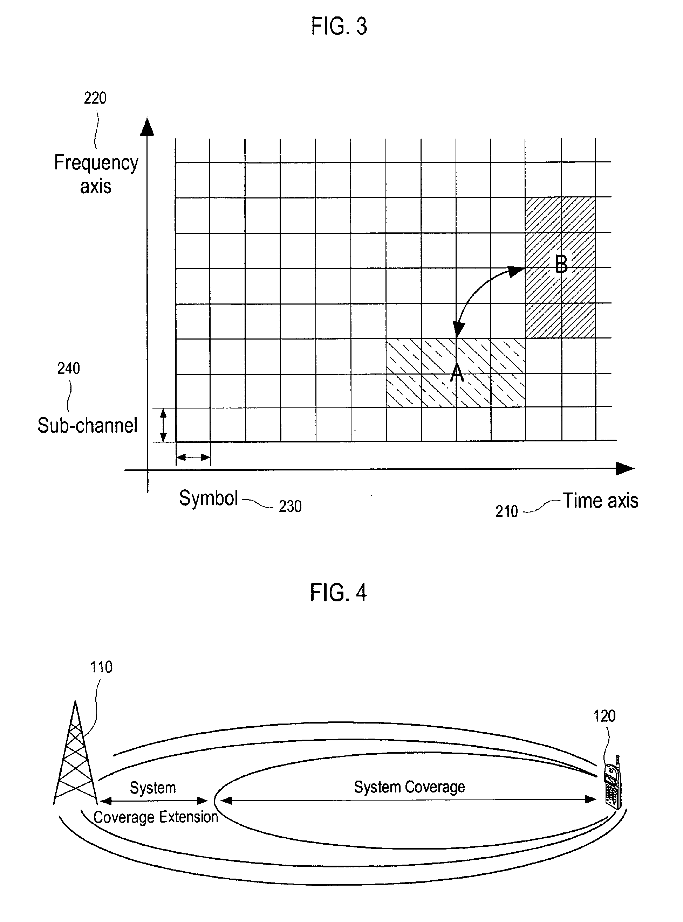

FIG. 3 comparatively illustrates a method of allocating wireless resource according to an example arrangement and according to an example embodiment of the present invention. Other embodiments and configurations are also within the scope of the present invention. The wireless resource allocation for downlink and uplink may be performed two-dimensionally with a number of symbols 230 and a number of sub-channels 240. For example, a two-dimensional allocation may be performed such as "4 sub-channels * 2 symbols" (B in FIG. 3) that includes 4 sub-channels and 2 symbols. The size of the allocated wireless channels (i.e., size of B) may be determined by a resource allocation scheduler according to an amount of data to be transferred and channel environments. The allocation scheme may vary according to the scheduler. Therefore, the mobile terminal 120 may prepare the transmission power for transmitting the signals using all of the frequencies. For example, if 50 sub-channels and 20 symbols may be usable in the uplink, the mobile terminal 120 may prepare transmission power for transmitting the signals using 50 sub-channels at a same time.

According to an example embodiment of the present invention, a method for allocating wireless resources may limit a maximum number of sub-channels when allocating the wireless resources for uplink. For example, when the amount of data to be transmitted by the mobile terminal 120 is 4 sub-channels * 2 symbols as shown in FIG. 3 (B in FIG. 3), the amount of data may be equal to 2 sub-channels * 4 symbols (A in FIG. 3). Therefore, when the transmission rate is not demanded to be high, the number of sub-channels may be limited to 2 while the amount of data to be transmitted by the mobile terminal 120 is maintained the same. When the number of sub-channels that the mobile terminal 120 may use to transmit data is limited, a power density per sub-channel may be improved.

More specifically, transmission power of a mobile terminal may be represented by the following Equation (1):

$$\text{Transmission Power} = \text{Bandwidth of Sub-channel } (\Delta BW) * \text{Transmission Power per}$$

$$\text{Bandwidth (Power per } \Delta BW) * \text{Number of Sub-channels (\# of BW)} \qquad (1)$$

Referring to Equation (1), although the transmission power of a mobile terminal is limited, the transmission power per sub-channel may be improved by limiting a number of sub-channels. Therefore, when a method for allocating wireless resources according to an example embodiment of the present invention may be used to limit the number of sub-channels that the mobile terminal may use to transmit data, the transmission power per sub-channel may be improved. Thus, the uplink coverage may also be improved.

A process for applying a method of allocating wireless resources according to an example embodiment of the present invention to a mobile communication system will now be explained. The system may be in an initial state before applying the method for allocating the wireless resources according to an example embodiment of the present invention. When the total number of sub-channels usable for an uplink between a mobile terminal 120 and a base station 110 is referred as Tot_Num_UL_SubCH, and a maximum number of sub-channels allocable for the mobile terminal 120 is referred as Max_Num_Alloc_UL_SubCH, the values of TocNum_UL_SubCH and Max_Num_Alloc_UL_SubCH may initially be identical. For example, when the total number of sub-channels usable for the uplink is 50 (i.e., Tot_Num_UL_ SubCH = 50), all of the sub-channels may be allocated for a certain mobile terminal 120 in the initial state. In such a case, the value of Max_Num_Alloc_UL_SubCH is identical to the value of Tot_Num_UL_SubCH (i.e., 50 in the example). Further, when the maximum transmission power of the mobile terminal 120 is referred as Max_UL_Tx_Pow, and the maximum power allocable to each sub-channel is referred as Alloc_UL_Tx_SubCH_Pow, Alloc_UL_Tx_SubCH_Pow has the value of Max_UL_Tx_Pow divided by Max_Num_Alloc_UL_SubCH, which may be represented as by the following Equation (2):

$$\text{Alloc\_UL\_Tx\_SubCH\_Pow} = \frac{\text{Max\_UL\_Tx\_Pow}}{\text{Max\_Num\_Alloc\_UL\_SubCH}} \qquad (2)$$

For example, when Max_UL_Tx_Pow is 200mW and Max_Num_Alloc_UL_SubCH is 50 as in the above example, Alloc_UL_Tx_SubCH_Pow may be 4mW.

As described above, when a method of allocating the wireless resources according to an example embodiment of the present invention is applied to the system in an initial state, the state of the system may be updated. As in the above example, Tot_Num_UL_SubCH is 50, Max_Num_Alloc_UL_SubCH may be limited to a predetermined value by the method of allocating the wireless resources according to an example embodiment of the present invention. For example, when Max_Num_Alloc_UL_SubCH is limited to 10, the value of maximum transmission power per sub-channel may be recalculated. As explained above, when the maximum power transmittable by the mobile terminal 120 (i.e., Max_UL_Tx_Pow) is 200mW, the maximum power allocable to a sub-channel (i.e., Alloc_UL_Tx_SubCH_Pow) is 20mW according to Equation (2). As explained above, when the method of allocating the wireless resources according to embodiments of the present invention is applied to the system, the maximum transmission power per sub-channel may be increased. In the above example, the maximum transmission power per sub-channel is increased from 4mW to 20mW (5-fold increase).

When the number of sub-channels usable for the uplink is 50 as in the above example, if the maximum number of sub-channels that may be used to transmit data is limited to 5, then a 10-fold power gain may be obtained as compared to a case when the method according to embodiments of the present invention is not applied. If the data transmission rate is not required to be high, then the number of sub-channels that may be used to transmit data may be limited to be smaller. In such a case, the power gain may be greater.

As described above, when the maximum transmission power per sub-channel for the uplink is increased, the uplink coverage may also be increased. For example, when the number of sub-channels is limited to half, the transmission power gain may be 2 times (i.e., 3dB). Thus, it may affect the uplink coverage. Therefore, as illustrated in FIG. 4, system coverage may also be increased by increasing the uplink coverage, which is a limitation factor for the system coverage.

In the embodiment described above, calculation of the maximum transmission power per sub-channel (i.e., Alloc_UL_Tx_SubCH_Pow) may be performed at the base station 110. Otherwise, the calculation may be performed at the mobile terminal 120 and a result of the calculation may then be transmitted to the base station 110. When the calculation is performed at the base station 110, the mobile terminal 120 may transmit information on the maximum transmission power (i.e., Max_UL_Tx_Pow) to the base station 110. When the calculation is performed at the mobile terminal 120, the base station 110 may transmit information on the total number of sub-channels usable for uplink (i.e., Tot_Num_UL_SubCH) and the maximum number of sub-channels allocable for the mobile terminal 120 (i.e., Max_Num_Alloc_UL_SubCH) to the mobile terminal 120. As a result of the calculation, the value of Alloc_UL_Tx_SubCH_Pow may be used to update the parameters of the power control scheme of the base station 110. The applied uplink power may be the maximum power of the mobile terminal controllable during the power control. It may act as a critical value for the power control to prevent any power overflow of the mobile terminal. The power control scheme may include any of a number of various schemes that are widely used in the art.

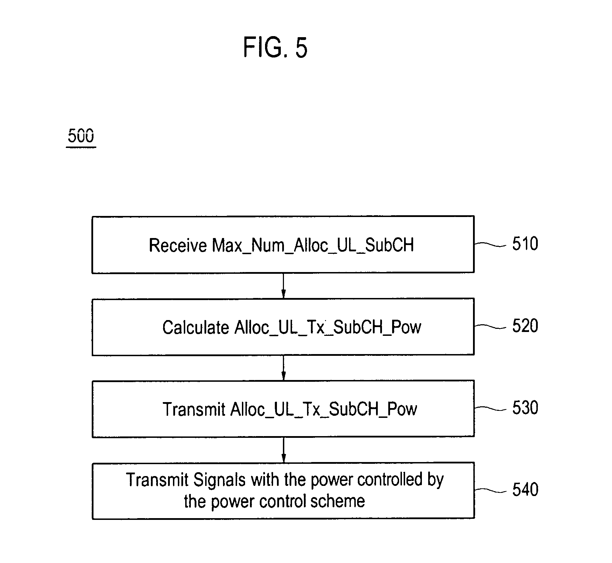

FIG. 5 is a flow chart illustrating a wireless communication process that involves calculating a maximum transmission power per sub-channel at a mobile terminal according to an example embodiment of the present invention. Other embodiments, operations and orders of operation are also within the scope of the present invention. In operation 510, the mobile terminal 120 receives a maximum number of sub-channels allocable for the mobile terminal 120 (i.e., Max_Num_Alloc_UL_SubCH) from the base station 110. Then, in operation 520, the mobile terminal 120 calculates the maximum transmission power per sub-channel (i.e., Alloc_UL_Tx_SubCH_Pow) based on the value of Max_Num_Alloc_UL_SubCH received in operation 510 and the maximum transmission power of the mobile terminal 120 (i.e., Max_UL_Tx_Pow). The calculation is performed by dividing the value of Max_UL_Tx_Pow by the value of Max_Num_Alloc_UL_SubCH, as described above. In operation 530, the mobile terminal 120 transmits the value of Alloc_UL_Tx_SubCH_Pow calculated in operation 520 to the base station 110. Then, when the base station 110 receives the value and applies the value to the power control scheme to control the transmission power of the mobile terminal 120, the mobile terminal 120 transmits signals (or data) with the controlled power in operation 540.

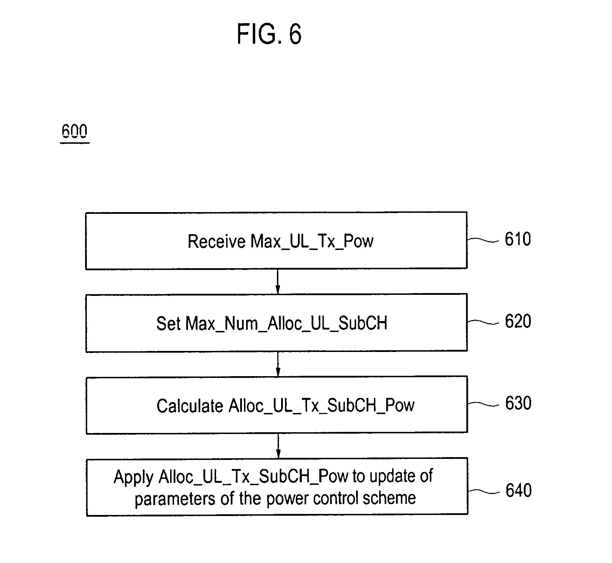

FIG. 6 is a flow chart illustrating wireless communication process that includes calculating maximum transmission power per sub-channel at a base station according to an example embodiment of the present invention. Other operations, orders of operations and embodiments are also within the scope of the present invention. In operation 610, the base station 110 receives the maximum transmission power of the mobile terminal 120 (i.e., Max_UL_Tx_Pow) from the mobile terminal 120. In operation 620, the base station 110 sets the maximum number of sub-channels allocable for the mobile terminal 120 (i.e., Max_Num_Alloc_UL_SubCH). The time sequence of operations 610 and 620 may be changed. Then, in operation step 630, the base station 110 calculates the maximum transmission power per sub-channel (i.e., Alloc_UL_Tx_SubCH_Pow) based on the value of Max_UL_Tx_Pow received in operation 610 and the value of Max_Num_Alloc_UL_SubCH set in operation 620. The calculation is performed by dividing the value of Max_UL_Tx_Pow by the value of Max_Num_Alloc_UL_SubCH, as described above. In operation 640, the base station 110 applies the value of Alloc_UL_Tx_SubCH_Pow calculated in operation 630 to update the parameters of the power control scheme so as to control the transmission power of the mobile terminal 120.

The above embodiments illustrate a situation where uplink coverage is smaller than downlink coverage. However, one skilled in the art from reading the present specification can understand that a same (or similar) method may be applied to an opposite case in order to improve system coverage.

According to the embodiments of the present invention, wireless link coverage of a mobile communication system may be extended to provide better wireless environments.

According to an exemplary embodiment of the present invention, a method may be provided to extend wireless link coverage in a wireless communication system. The method may include limiting a number of allocable sub-channels to a predetermined value in allocating the wireless channels that include sub-channels and symbols. The method may also include calculating a maximum transmission power per sub-channel based on the limited number of allocable sub-channels and performing power control based on the calculated maximum transmission power per sub-channel.

A method may also be provided to extend wireless link coverage in a wireless communication system that includes a base station and a mobile terminal. The method may be executed at the mobile terminal and may include receiving information on a maximum number of allocable sub-channels for the mobile terminal from the base station. The method may also include calculating the maximum transmission power per sub-channel based on the information and transmitting information on the calculated maximum transmission power per sub-channel to the base station. Still further, the method may include transmitting signals under power control based on the information on the maximum transmission power per sub-channel.

A method may also be provided to extend wireless link coverage in a wireless communication system that includes a base station and a mobile terminal. The method may be executed at the base station and may include receiving information on transmittable maximum power of the mobile terminal from the mobile terminal and setting the maximum number of allocable sub-channels for the mobile terminal. The method may also include calculating the maximum transmission power per sub-channel of the mobile terminal based on the received information and the set maximum number of allocable sub-channels. The method may further include performing power control based on information on the maximum transmission power per sub-channel.

Any reference in this specification to "one embodiment," "an embodiment," "example embodiment," etc., means that a particular feature, structure or characteristic described in connection with the embodiment is included in at least one embodiment of the present invention. The appearances of such phrases in various places in the specification are not necessarily all referring to the same embodiment. Further, when a particular feature, structure or characteristic is described in connection with any embodiment, it is submitted that it is within the purview of one skilled in the art to effect such feature, structure or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for extending wireless link coverage in a wireless communication system, comprising:

   limiting a number of allocable sub-channels to a predetermined value in allocating wireless channels that include sub-channels and symbols;
   calculating a maximum transmission power per sub-channel based on the limited number of allocable sub-channels; and
   performing power control based on the calculated maximum transmission power per sub-channel.

2. The method of claim 1, wherein calculating the maximum transmission power per sub-channel includes dividing a transmittable maximum power by the limited number of allocable sub-channels.

3. The method of claim 1, wherein the wireless communication system includes a base station and a mobile terminal, and wherein calculating the maximum transmission power per sub-channel is performed at the base station.

4. The method of claim 3, wherein calculating the maximum transmission power per sub-channel includes dividing a transmittable maximum power of the mobile terminal by a maximum number of allocable sub-channels for the mobile terminal.

5. The method of claim 4, wherein the maximum number of allocable sub-channels corresponds to the limited number of allocable sub-channels.

6. The method of claim 4, further comprising:

   the base station receiving information on the transmittable maximum power of the mobile terminal prior to calculating the maximum transmission power per sub-channel.

7. The method of claim 6, further comprising transmitting signals based on the power control.

8. The method of claim 1, wherein the wireless communication system includes a base station and a mobile terminal, and wherein calculating the maximum transmission power per sub-channel is performed at the mobile terminal.

9. The method of claim 8, wherein calculating the maximum transmission power per sub-channel includes dividing a transmittable maximum power of the mobile terminal by a maximum number of allocable sub-channels for the mobile terminal.

10. The method of claim 9, further comprising:

    the mobile terminal receiving information on a maximum number of allocable sub-channels.

**11.** The method of claim 10, wherein the maximum number of allocable sub-channels corresponds to the limited number of allocable sub-channels.

**12.** The method of claim 8, further comprising transmitting information on the calculated maximum transmission power per sub-channel to the base station.

**13.** The method of claim 12, further comprising transmitting signals based on the power control.

**14.** A method for extending wireless link coverage in a wireless communication system including a base station and a mobile terminal, the method executed at the mobile terminal comprising:

receiving information on a number of allocable sub-channels for the mobile terminal from the base station;
calculating a transmission power per sub-channel based on the received information;
transmitting information on the calculated transmission power per sub-channel to the base station; and
transmitting signals under power control based on the information on the transmission power per sub-channel.

**15.** The method of claim 14, wherein receiving information on the number of allocable sub-channels includes receiving information on a maximum number of allocable sub-channels, wherein calculating the transmission power per sub-channel includes calculating a maximum transmission power per sub-channel, and wherein transmitting information on the calculated transmission power per sub-channel includes transmitting information on the calculated maximum transmission power per sub-channel.

**16.** The method of claim 15, wherein calculating the maximum transmission power per sub-channel includes dividing a transmittable maximum power of the mobile terminal by the maximum number of allocable sub-channels for the mobile terminal.

**17.** A method for extending wireless link coverage in a wireless communication system including a base station and a mobile terminal, the method executed at the base station comprising:

receiving information on a transmittable power of the mobile terminal from the mobile terminal;
setting a number of allocable sub-channels for the mobile terminal;
calculating a transmission power per sub-channel of the mobile terminal based on the received information and the set number of allocable sub-channels; and
performing power control based on information on the calculated transmission power per sub-channel.

**18.** The method of claim 17, wherein receiving information on the transmittable power includes receiving information on a transmittable maximum power, wherein setting the number of allocable sub-channels includes setting a maximum number of allocable sub-channels, and wherein calculating the transmission power per sub-channel includes calculating a maximum transmission power per sub-channel.

**19.** The method of claim 18, wherein calculating the maximum transmission power per sub-channel includes dividing the transmittable maximum power of the mobile terminal by the maximum number of allocable sub-channels for the mobile terminal.

# FIG. 1

(a)

110

Downlink Coverage

(b)

Uplink Coverage

120

(c)

110

System Coverage

120

# FIG. 2

EP 1 895 676 A1

FIG. 3

220

Frequency
axis

240

Sub-channel

Symbol —~ 230

B

A

210 —~ Time axis

FIG. 4

110

120

System
Coverage Extension

System Coverage

# FIG. 5

500

| Receive Max_Num_Alloc_UL_SubCH | — 510 |

| Calculate Alloc_UL_Tx_SubCH_Pow | — 520 |

| Transmit Alloc_UL_Tx_SubCH_Pow | — 530 |

| Transmit Signals with the power controlled by the power control scheme | — 540 |

# FIG. 6

600

Receive Max_UL_Tx_Pow — 610

Set Max_Num_Alloc_UL_SubCH — 620

Calculate Alloc_UL_Tx_SubCH_Pow — 630

Apply Alloc_UL_Tx_SubCH_Pow to update of parameters of the power control scheme — 640

**European Patent Office**

## EUROPEAN SEARCH REPORT

Application Number

EP 07 01 4507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/122515 A (INTEL CORP [US]; SADRI ALI [US]; MALTSEV ALEXANDER [RU]; PUDEYEV ANDRE) 22 December 2005 (2005-12-22) <br> * page 2, line 22 - page 7, line 19 * <br> * page 8, line 23 - page 9, line 15 * <br> * abstract; figures 1,2 * <br> ----- | 1-19 | INV. <br> H04B7/005 <br> H04Q7/36 |
| A | EP 0 748 075 A (CANON KK [JP]) 11 December 1996 (1996-12-11) <br> * column 1, line 30 - line 50 * <br> * column 4, line 36 - line 44 * <br> * column 8, line 50 - column 9, line 11 * <br> ----- | 1-19 | |
| A | US 2004/229621 A1 (MISRA ARCHAN [US]) 18 November 2004 (2004-11-18) <br> * abstract * <br> ----- | 1,14,17 | |

TECHNICAL FIELDS SEARCHED (IPC)

H04B
H04Q

The present search report has been drawn up for all claims

| Place of search | Date of completion of the search | Examiner |
|---|---|---|
| Munich | 11 January 2008 | Schorgg, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 07 01 4507

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2008

| Patent document cited in search report | | Publication date | Patent family member(s) | | | Publication date |
|---|---|---|---|---|---|---|
| WO 2005122515 | A | 22-12-2005 | CN | 1965554 | A | 16-05-2007 |
| EP 0748075 | A | 11-12-1996 | CN | 1142715 | A | 12-02-1997 |
| | | | DE | 69633844 | D1 | 23-12-2004 |
| | | | DE | 69633844 | T2 | 03-11-2005 |
| | | | US | 6122295 | A | 19-09-2000 |
| US 2004229621 | A1 | 18-11-2004 | CN | 1792108 | A | 21-06-2006 |
| | | | EP | 1625765 | A1 | 15-02-2006 |
| | | | KR | 20060005362 | A | 17-01-2006 |
| | | | WO | 2004105420 | A1 | 02-12-2004 |

EPO FORM P0459

For more details about this annex : see Official Journal of the European Patent Office, No. 12/82

**EP 1 895 676 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 10200684173